# EUROPÄISCHE PATENTSCHRIFT

(11) **EP 4 163 493 B1**
(45) Veröffentlichungstag und Bekanntmachung des Hinweises auf die Patenterteilung: **09.12.2026**
(21) Anmeldenummer: 21201880.8
(22) Anmeldetag: 11.10.2021
(51) Int. Cl.: F03D 7/04, G06F 21/31, G05B 19/042

(54) **VERFAHREN ZUM BEREITSTELLEN VON SOLLWERTEN FÜR EINEN WINDPARKREGLER SOWIE WINDPARKSERVER UND SYSTEM DAFÜR**
METHOD FOR PROVIDING SET VALUES FOR A WIND FARM CONTROLLER AND A WIND FARM SERVER AND SYSTEM THEREFOR
PROCÉDÉ DE FOURNITURE DES VALEURS DE CONSIGNE POUR UN RÉGULATEUR DE PARC ÉOLIEN, AINSI QUE SERVEUR DE PARC ÉOLIEN ET SYSTÈME ASSOCIÉ

(43) Veröffentlichungstag der Anmeldung: 12.04.2023
(73) Patentinhaber: Wobben Properties GmbH, 26607 Aurich (DE)
(72) Erfinder: Giertz, Helge, 26789 Leer (DE)
(74) Vertreter: Eisenführ Speiser

(56) Entgegenhaltungen:
- EP-B1- 2 765 466
- CN-A- 107 479 524
- US-A1- 2017 363 065

## Beschreibung

Die Erfindung betrifft den Bereich der Steuerung von Windenergieanlagen eines Windparks.

Einzelne Windenergieanlagen weisen üblicherweise eine Steuerung auf, mit der der Betrieb dieser Windenergieanlagen gesteuert oder geregelt wird. Mit der Steuerung und angeschlossenen Sensoren werden beispielsweise eigenständig die vorherrschenden Windverhältnisse detektiert und in Abhängigkeit dieser detektierten Windverhältnisse der Betrieb der Windenergieanlage gesteuert oder geregelt. Sind mehrere Windenergieanlagen in einem Verbund zu einem Windpark zusammengeschlossen und speisen somit an einem gemeinsamen Einspeisepunkt Energie in ein Netz ein, so werden die Steuer- und Regelaufgaben teilweise oder vollständig auf einen Windparkregler als übergeordnete Instanz für alle Windenergieanlagen eines Windparks ausgelagert. Im Grunde ist durch die Steuerungen der Windenergieanlagen eines Windparks oder den Windparkregler ein im Wesentlichen autarker Betrieb des Windparks möglich.

Das Dokument EP 2 765 466 B1 offenbart ein Windenergieanlagensteuersystem für Windenergieanlagen mit einer Benutzerverwaltung, wobei Benutzern in einem zentralen Server Benutzerrollen zugewiesen werden, die eine Berechtigung verschiedener Benutzer zur Steuerung von Windenergieanlagen oder zum Abruf von Daten von den Windenergieanlagen zuordnen. Eine Liste mit Benutzerrollen wird gemäß dem Dokument auch auf in Windparks vorhandene lokale Windparkserver übertragen, so dass sich ein Benutzer beim Ausfall des zentralen Servers direkt auf die lokalen Server einwählen kann und dem Benutzer dort eindeutig auch ohne Kommunikation mit dem zentralen Server seine Benutzerrolle zugewiesen werden kann. Das Dokument US 2017/0363065 A1 offenbart ein Verfahren, bei dem ein Zertifizierungscenter vorgesehen ist, mit dem Zertifikate ausgegeben werden können, wobei diese ausgegebenen Zertifikate einem Benutzer ermöglichen, sich für den Zugriff auf eine Windenergieanlage zu authentifizieren. Hierbei werden den Zertifikaten Benutzerrollen zugewiesen, so dass ein Benutzer mit einem Zertifikat die Zugriffsrechte auf eine Windenergieanlage erhält, die durch die Benutzerrolle im Zertifikat hinterlegt ist. Das Dokument CN 107479524 A offenbart ein intelligentes SCADA-System für Windparks, das eine Überwachung der Windenergieanlagen über verschiedene Überwachungssysteme ermöglicht.

Mit zunehmendem Maße werden jedoch Betriebsführungsaufgaben, die das Anpassen des Betriebsverhaltens eines Windparks von außerhalb des Windparks umfassen, in Windparks immer wichtiger. Dies resultiert aus Baugenehmigungsauflagen sowie Energie- und Vermarktungsregeln. Ein Einfluss auf die Steuerung und Regelung einer Windenergieanlage muss demnach von diversen unterschiedlichen externen, außerhalb eines Windparks liegenden Steuereinrichtungen ermöglicht werden. Auch diese Betriebsführungsaufgaben werden teilweise von unabhängigen externen Steuereinrichtungen zunehmend automatisiert ausgeführt, um die Anforderungen an einen Betrieb zu erfüllen.

Dies führt dazu, dass Windparkserver immer häufiger einen Einsatz in Windparks finden, wobei die Windparkserver eine Vielzahl von Schnittstellen bereitstellen, über die unterschiedlichen externen Einheiten ein Zugriff auf den Windparkregler ermöglicht wird. Derartige Schnittstellen sind beispielsweise Schnittstellen für einen Direktvermarkter, Schnittstellen für eine Fernsteuerung des Windparks oder Schnittstellen zur Steuerung des Windparks durch einen Betreiber.

Diese Schnittstellen sind jeweils häufig individuell an die Anforderungen der externen Einheit angepasst, die einen Zugriff auf den Windpark benötigt. Daraus resultiert eine Vielzahl unterschiedlicher Schnittstellen eines Windparkservers. Vorteilhaft darin, dass jeder der unterschiedlichen Schnittstellen jedoch üblicherweise fest eine Einheit zugeordnet ist, ist, dass Befehle, die über die jeweilige Schnittstelle empfangen werden, eindeutig einer Einheit zuordenbar sind. Jeder der Einheiten ist üblicherweise eine Priorität zugeordnet, die im Regler berücksichtigt werden muss, um Einwirkungen auf die Betriebsführung von mehreren Einheiten entsprechend ihrer Priorität abzuarbeiten. Diese Priorität kann nun in einfacher Weise direkt aus der Kenntnis darüber abgeleitet werden, von welcher Schnittstelle Daten durch den Windparkserver empfangen werden..

Aufgrund neuer regulatorischer Änderungen, wie beispielsweise der Einführung des so genannten "Redispatch 2.0", werden erneuerbare Energieanlagen mit neuen Vorgaben für die Bewirtschaftung von Netzengpässen beaufschlagt. Dies betrifft Netzbetreiber, Anlagenbetreiber und Direktvermarkter. Insbesondere soll durch neue Prozesse der Informations- und Datenaustausch verbessert und durch eine Durchführung vordefinierter Redispatch-Maßnahmen der Bilanzkreisausgleich und die Abrechnung geregelt werden. Weiterreichende Regelungen zum Datenaustausch zwischen Anlagenbetreibern und Netzbetreibern werden erforderlich. Damit muss eine einheitliche Schnittstelle für mehrere externe Einheiten geschaffen werden, um verschiedenen Einheiten einen Zugriff auf den Windpark über die einheitliche Schnittstelle zu ermöglichen.

Derartige einheitliche Schnittstellen sind zurzeit nicht vorgesehen, da bislang jede Einheit ihre eigene bevorzugte Schnittstelle zu einem Windpark hatte. Eine Ergänzung eines Windparkservers um eine neue einheitliche Schnittstelle ist bei bestehenden Systemen schwierig nachrüstbar und meist nur mit einem Austausch des Windparkservers und einer Anpassung oder Erneuerung der Kommunikationsstruktur zwischen Windparkserver und Windparkregler möglich.

Aufgabe der vorliegenden Erfindung ist es daher den Problemen des Standes der Technik zu begegnen. Insbesondere soll eine einheitliche Schnittstelle geschaffen werden, um unterschiedlichen externen Einheiten einen Zugriff auf einen Windpark über die gleiche Schnittstelle zu bieten. Jedenfalls ist es Aufgabe der vorliegenden Erfindung eine Alternative zum Stand der Technik zu finden.

Die Erfindung betrifft demnach ein Verfahren zum Bereitstellen von Sollwerten für einen Windparkregler nach Anspruch 1.

Gemäß der Erfindung ist daher ein Verfahren zum Bereitstellen von Sollwerten für einen Windparkregler vorgesehen, das mithilfe eines Windparkservers ausgeführt wird, der eine Eingangsschnittstelle aufweist. Mit der Eingangsschnittstelle werden Sollwerte für den Windparkregler nach einer erfolgreichen Authentifizierung durch einen Zugangsdatensatz empfangen. Demnach wird also durch die Eingangsschnittstelle zunächst ein Zugangsdatensatz von mehreren vordefinierten Zugangsdatensätzen empfangen. Dieser wird von einer externen Einheit, beispielsweise einem entfernten Rechner, an den Windparkserver gesendet. Die externe Einheit ist beispielsweise ein Rechner eines Direktvermarkters oder eines Netzbetreibers. Dieser Zugangsdatensatz kann beispielsweise einen Benutzernamen und ein Passwort oder eine vordefinierte Zeichenfolge, wie beispielsweise auch nur eine IP-Nummer, umfassen. Jedenfalls identifiziert dieser Zugangsdatensatz eindeutig einen Benutzer, der berechtigt ist, mit dem Windparkserver zu kommunizieren. Demnach kann ein Zugangsdatensatz zu einer erfolgreichen Authentifizierung führen, wenn dieser Zugangsdatensatz als gültiger Zugangsdatensatz im Windparkserver hinterlegt ist. Ist der Zugangsdatensatz nicht hinterlegt und somit ungültig, so ist auch eine Authentifizierung durch einen derartigen Zugangsdatensatz nicht erfolgreich. Im Windparkserver sind somit mehrere vordefinierte Zugangsdatensätze bekannt, mit denen nämlich eine erfolgreiche Authentifizierung an der Eingangsschnittstelle möglich ist.

Weiter wird im Windparkserver jedem der Zugangsdatensätze eine von mehreren vordefinierten Benutzeridentifikationen zugeordnet.

Ferner wird dem mit der Eingangsschnittstelle empfangenen Sollwert der Benutzeridentifikator zugeordnet, der dem Zugangsdatensatz zugeordnet ist, der für die erfolgreiche Authentifizierung vor dem Empfang des Sollwerts verwendet wurde. Es wird also nach einer erfolgreichen Authentifizierung durch einen Zugangsdatensatz einem empfangenen Sollwert die Benutzeridentifikation zugeordnet, die dem für die Authentifizierung zugeordneten Zugangsdatensatz zugeordnet ist.

Erfindungsgemäß werden dann empfangene Sollwerte zusammen mit der zugeordneten Benutzeridentifikation an den Windparkregler vom Windparkserver ausgegeben.

Gemäß der Erfindung wird demnach aus dem Zugangsdatensatz ein Benutzeridentifikator ermittelt und jedem Sollwert zugeordnet. Unterschiedliche externe Einheiten, die eine Berechtigung haben, Sollwerte an den Windparkregler zu übertragen, erhalten auch unterschiedliche Zugangsdatensätze. Durch die von den Zugangsdatensätzen mit dem Windparkserver abgeleiteten Benutzeridentifikatoren, die den Sollwerten entsprechend zugeordnet werden, kann eindeutig jeder Sollwert der Einheit zugeordnet werden, die diesen Sollwert gesendet hat. Dies wird gerade dann möglich, wenn unterschiedliche Einheiten ihre Sollwerte über die gleiche Eingangsschnittstelle an den Windparkserver senden. Ein Windparkregler kann die Benutzeridentifikatoren dann verwenden, um dem jeweils zugeordneten Sollwert eine Priorität zuzuordnen.

Zusammengefasst ist also dank der Erfindung eine Zuordnung der Sollwerte zu einer Quelle des Sollwerts anhand der dem Sollwert zugeordneten Benutzeridentifikator möglich.

Gemäß einer ersten Ausführungsform ist jeder der vordefinierten Zugangsdatensätze, also der Zugangsdatensätze, mit denen eine erfolgreiche Authentifizierung möglich wird, jeweils einer ersten Menge der vordefinierten Zugangsdatensätze oder einer zweiten Menge der vordefinierten Zugangsdatensätze zugeordnet. Jedem der Zugangsdatensätze der ersten Menge wird im Windparkregler derselbe Benutzeridentifikator von mehreren vordefinierten Benutzeridentifikatoren zugeordnet. Jedem der Zugangsdatensätze der zweiten Menge wird jeweils ein individueller Benutzeridentifikator der mehreren vordefinierten Benutzeridentifikatoren zugeordnet.

Somit ist also jeder der vordefinierten Zugangsdatensätze entweder der ersten Menge oder der zweiten Menge zugeordnet. Benutzeridentifikatoren werden demnach individuell nur für Zugangsdatensätze vergeben, die der zweiten Menge zugeordnet sind. Alle Zugangsdatensätze, die der ersten Menge zugeordnet sind, werden demselben Benutzeridentifikator zugeordnet. Hierdurch ergibt sich der Vorteil, dass alle Zugangsdatensätze, mit denen eine erfolgreiche Authentifizierung möglich ist, die also als vordefinierte Zugangsdatensätze im Windparkserver hinterlegt sind, einen Zugriff auf den Windparkregler durch Übertragen von Sollwerten erhalten können. Um die Zuordnung der Sollwerte zu Zugangsdaten, also zu einer den Sollwert sendenden Einheit, zu ermöglichen, können einige der Zugangsdatensätze unterschiedlichen Benutzeridentifikatoren zugeordnet werden. Die Erfindung kann also mit wenigen Benutzeridentifikatoren realisiert werden. Eine Zuordnung der Sollwerte zur sendenden Einheit im Windparkregler durch die Benutzerkennung und eine Zuordnung einer Priorität zum Sollwert ist demnach nur für eine begrenzte Anzahl von Einheiten möglich. So ist eine Rückwärtskompatibilität gegeben, so dass auch Einheiten Sollwerte an den Windparkregler übertragen können, die zwar über einen Zugangsdatensatz verfügen, aber für deren Verarbeitung der Sollwerte eine Quelle nicht identifizierbar sein muss, da diese eine Standardpriorität aufweisen.

Ein bestehendes System mit einer Schnittstelle, die bislang keine Zuordnung und Übertragung von Benutzeridentifikatoren ermöglicht hat, kann demnach mit geringem Aufwand angepasst werden, um zumindest einigen der Zugangsdatensätze einen Benutzeridentifikator zuzuordnen.

Gemäß einer weiteren Ausführungsform umfasst der Windparkserver mindestens eine weitere Eingangsschnittstelle. Mit der weiteren Eingangsschnittstelle werden weitere Sollwerte für den Windparkregler empfangen und diese weiteren Sollwerte an den Windparkregler ausgegeben. Der Eingangsschnittstelle und der weiteren Eingangsschnittstelle sind jeweils unterschiedliche Schnittstellenidentifikatoren zugeordnet. Die weiteren Sollwerte werden gemäß dieser Ausführungsform zusätzlich mit dem Schnittstellenidentifikator der weiteren Eingangsschnittstelle an den Windparkregler ausgegeben. Jedem weiteren Sollwert, also dem Sollwert, der über die weitere Eingangsschnittstelle empfangen wurde, ist somit ein Schnittstellenidentifikator zugeordnet, der mit dem Sollwert an den Windparkregler übertragen wird. Beispielsweise können auch Sollwerte mit dem Schnittstellenidentifikator der Eingangsschnittstelle an den Windparkregler übertragen werden, die von der Eingangsschnittstelle empfangen wurden. Besonders bevorzugt ist also allen weiteren Sollwerten ein Schnittstellenidentifikator zugeordnet, der mit jedem der weiteren Sollwerte übertragen wird und jedem der Sollwerte ist ein anderer Schnittstellenidentifikator als den weiteren Sollwerten oder alternativ der Benutzeridentifikator zugeordnet, der mit den Sollwerten übertragen wird. Beispielsweise kann ein Regler anhand der Schnittstellenidentifikatoren und/oder der Benutzeridentifikatoren grundsätzlich die Einheit bestimmen, die die Sollwerte bereitgestellt hat. Dies gilt nur für den Fall, dass über die weitere Eingangsschnittstelle nur weitere Sollwerte von einer einzigen Einheit empfangbar sind. Ist demnach genau eine Eingangsschnittstelle für mehrere Einheiten geöffnet, so kann, wie bereits zuvor genannt, anhand des zusätzlichen dem Sollwert zugeordneten Benutzeridentifikators auch die Einheit, die den Sollwert übertragen hat, identifiziert werden.

Gemäß einer weiteren Ausführungsform werden die weiteren Sollwerte, nämlich die Sollwerte, die über die weitere Eingangsschnittstelle empfangen wurden, benutzeridentifikatorlos an den Windparkregler gesendet. Demnach werden also nur Sollwerte, die über die Eingangsschnittstelle empfangen werden mit einem Benutzeridentifikator an den Windparkregler übertragen und die weiteren Sollwerte der weiteren Eingangsschnittstelle ohne einen Benutzeridentifikator, also benutzeridentifikatorlos. Besonders bevorzugt kann so ein Datenpaket, das vom Windparkserver an den Windparkregler übertragen wird, für Sollwerte, die über die Eingangsschnittstelle empfangen werden, bezüglich der Datenpaketgröße genauso ausgebildet sein, wie ein Datenpaket, mit dem Sollwerte übertragen werden, die über die weitere Eingangsschnittstelle empfangen wurden. Ein Datenpaket, das einen Sollwert umfasst, der von der Eingangsschnittstelle empfangen wurde, wird dann in einem Datenpaket mit einem Benutzeridentifikator übertragen und ein Sollwert wird in einem Datenpaket mit seinem Schnittstellenidentifikator anstatt mit einem Benutzeridentifikator übertragen. Der Regler kann dann eindeutig die Sollwerte, die einen Benutzeridentifikator aufweisen, der Eingangsschnittstelle zuweisen und die Sollwerte, denen ein Schnittstellenidentifikator zugewiesen ist, können der weiteren Eingangsschnittstelle zugeordnet werden.

Gemäß einer weiteren Ausführungsform ist im Windparkserver eine Liste mit mehreren Einträgen hinterlegt. Die Anzahl der Einträge entspricht vorzugsweise der Anzahl der vordefinierten Benutzeridentifikationen. Jeder der Einträge ordnet jeder der vordefinierten Benutzeridentifikationen jeweils eine Sollwertgruppe zu. Jede der Sollwertgruppen umfasst mehrere Sollwerte. Die Sollwerte einer Sollwertgruppe entsprechen unterschiedlichen Arten von Sollwerten. Eine Art von Sollwerten ist beispielsweise ein Sollwert für eine Regelung einer Wirkleistung. Eine andere Art von Sollwert ist ein Sollwert für eine Regelung einer Blindleistung. Ferner werden empfangene Sollwerte über die Eingangsschnittstelle in den Sollwertgruppen entsprechend ihrer zugeordneten Benutzeridentifikation und Art eingetragen. Ein Hinterlegen der Liste mit mehreren Einträgen umfasst hier ein Speichern der Liste.

Somit werden alle empfangenen Sollwerte im Windparkserver hinterlegt, wodurch ermöglicht wird, dass im Fall eines Kommunikationsfehlers zwischen Windparkserver und Windparkregler oder im Fall eines Neustarts des Windparkreglers alle empfangenen Sollwerte redundant im Windparkserver hinterlegt sind. Auf Anfrage des Windparkreglers kann der Windparkserver alle aktuellen Sollwerte erneut an den Windparkregler übertragen.

Gemäß einer weiteren Ausführungsform wird eine Reihenfolge der Einträge nach dem Empfang eines neuen Sollwerts aktualisiert. Ein Eintrag mit einem neuen empfangenen Sollwert wird beispielsweise immer als letzter Eintrag in der Liste hinterlegt, wodurch die Einträge nach dem Empfangszeitpunkt der Sollwerte sortiert sind. So umfasst beispielsweise der erste Eintrag den am weitesten in der Vergangenheit empfangenen Sollwert, also den ältesten Sollwert, und der letzte Eintrag umfasst den jüngsten empfangenen Sollwert. Hierbei wird davon ausgegangen, dass ein Sollwert einer bestimmten Art beim Eintragen in die Liste einen zuvor empfangenen Sollwert der gleichen Art und mit der gleichen Benutzerkennung, der bereits im Eintrag vorhanden war, überschreibt. Jede Sollwertgruppe, die einer Benutzeridentifikation mit einem Eintrag zugeordnet ist, umfasst demnach nur einen Sollwert einer Art.

Durch die Sortierung der Einträge nach Empfangszeitpunkten lässt sich eine weitere Priorisierung der Sollwerte ableiten, die beispielsweise vom Windparkregler für eine Steuerung verwendbar ist.

Gemäß einer weiteren Ausführungsform wird nach dem Empfangen eines neuen Sollwerts mit der Eingangsschnittstelle der Eintrag mit dem neuen Sollwert an den Regler übertragen. Demnach wird also nicht nur der Sollwert mit seiner Benutzeridentifikation an den Windparkregler übertragen, sondern es wird die gesamte Sollwertgruppe erneut übertragen. Der Regler kann so anhand eines neuen Empfangszeitpunkts, der für die gesamte Gruppe von Sollwerten festgelegt wird, eine neue Priorisierung der gesamten Sollwerte der Sollwertgruppe und nicht nur des neu empfangenen Sollwerts vornehmen.

Gemäß einer weiteren Ausführungsform werden nach dem Empfangen einer Anfrage vom Windparkregler alle Einträge an den Regler übertragen. Vorzugsweise werden die Einträge in ihrer sortierten Reihenfolge gesendet, so dass ein Eintrag, der den am weitesten in der Vergangenheit empfangenen Sollwert umfasst, zuerst und ein Eintrag, insbesondere der letzte Eintrag, der den jüngsten empfangenen Sollwert umfasst, zuletzt übertragen wird.

Fällt der Windparkregler aus oder verliert die bereits empfangenen Sollwerte durch einen Neustart oder dergleichen, kann so der Windparkregler erneut mit allen empfangenen Sollwerten für eine Steuerung oder Regelung der Windenergieanlagen versorgt werden. Besonders bevorzugt wird so auch durch die zeitliche Sortierung der Übersendung der Einträge eine entsprechende Sortierung im Windparkregler durchgeführt, so dass der Windparkregler eine Priorisierung anhand der Empfangszeitpunkte vornehmen kann.

Gemäß einer weiteren Ausführungsform umfasst jeder Eintrag eine Kennung, die angibt, ob der Eintrag erfolgreich vom Windparkregler empfangen wurde. Die Kennung wird in Abhängigkeit von einer erhaltenen oder ausbleibenden Erfolgsmeldung des Windparkreglers nach dem Senden eines Eintrags durch den Windparkserver aktualisiert. Demnach wird also ein Eintrag vom Windparkserver an den Windparkregler, nämlich nach dem Empfang eines neuen Sollwerts, übermittelt. Empfängt der Windparkregler den Eintrag und verarbeitet diesen, so wird dies als Erfolgsmeldung vom Windparkregler an den Windparkserver gemeldet. Erhält der Windparkserver diese Erfolgsmeldung, wird die Kennung aktualisiert, so dass diese anzeigt, dass der Eintrag erfolgreich vom Windparkregler empfangen wurde. Bei einer Kommunikationsstörung bleibt also der Empfang der Erfolgsmeldung aus, beispielsweise nach Ablauf einer vorbestimmten Zeitdauer. So wird durch die Kennung des Eintrags dargestellt, dass der Eintrag nicht vom Windparkregler empfangen wurde. Ein erneutes Senden des Eintrags entweder unmittelbar oder nach Ablauf einer vordefinierten Zeitdauer kann somit erfolgen, bis die Erfolgsmeldung vom Windparkserver erhalten und die Kennung entsprechend angepasst wird.

Es kann somit sichergestellt werden, dass der Windparkregler alle gesendeten Einträge verarbeitet.

Ferner betrifft die Erfindung einen Windparkserver zum Ausführen des Verfahrens nach einer der vorgenannten Ausführungsformen.

Gemäß einer Ausführungsform des Windparkservers erfüllt die Eingangsschnittstelle eine OPC-, Open-Platform-Communications-Spezifikation. Insbesondere erfüllt die Eingangsschnittstelle die OPC XML-DA-Spezifikation, nämlich eine OPC zur XML-basierten Übertragung von Echtzeitwerten. Alternativ erfüllt die Schnittstelle eine IEC 61400-Norm, insbesondere die IEC 61400-1:2019. Vorzugsweise erfüllt die weitere Eingangsschnittstelle eine Spezifikation, die sich von der Spezifikation der Eingangsschnittstelle unterscheidet. Eine Eingangsschnittstelle nach den genannten Normen ist häufig bereits vorhanden und kann durch eine entsprechende Anpassung des Windparkservers in einfacher Weise ergänzt werden, um die genannten Vorteile der Erfindung zu erfüllen.

Ferner umfasst die Erfindung einen Windparkserver, der eingerichtet ist, das Verfahren nach einer der vorgenannten Ausführungsformen auszuführen.

Gemäß einerweiteren Ausführungsform umfasst die Erfindung ein System mit einem Windparkregler und dem Windparkserver.

Gemäß einer Ausführungsform des Systems ist der Windparkregler eingerichtet, mindestens eine Windenergieanlage in Abhängigkeit von den Sollwerten der Sollwertgruppen der Einträge zu steuern oder zu regeln.

Gemäß einer weiteren Ausführungsform des Systems ist der Windparkregler eingerichtet, um den Sollwerten in Abhängigkeit von dem dem Sollwert zugeordneten Benutzeridentifikator eine Priorität zuzuordnen.

Gemäß einer weiteren Ausführungsform des Systems wird die Reihenfolge der Empfangszeitpunkte der Einträge durch den Windparkregler bei der Festlegung der Priorität einer Regelung der Windenergieanlagen berücksichtigt. Einem Eintrag, der den am weitesten in der Vergangenheit liegenden empfangenen Sollwert umfasst, wird demnach eine höhere Priorität zugeordnet, als einem Eintrag, der den jüngsten empfangenen Sollwert umfasst.

Gemäß einer weiteren Ausführungsform des Systems, wird im Windparkregler eine Priorität eines Sollwerts in Abhängigkeit von einem Schnittstellenidentifikator und/oder einer Benutzerkennungen des Sollwerts bestimmt.

Weitere Ausführungsformen ergeben sich anhand der in den Figuren näher erläuterten Ausführungsbeispiele. Hierbei zeigt:
- Figur 1: eine Windenergieanlage,
- Figur 2: einen Windpark,
- Figur 3: ein System gemäß einem Ausführungsbeispiel und
- Figur 4: eine Liste mit Einträgen.

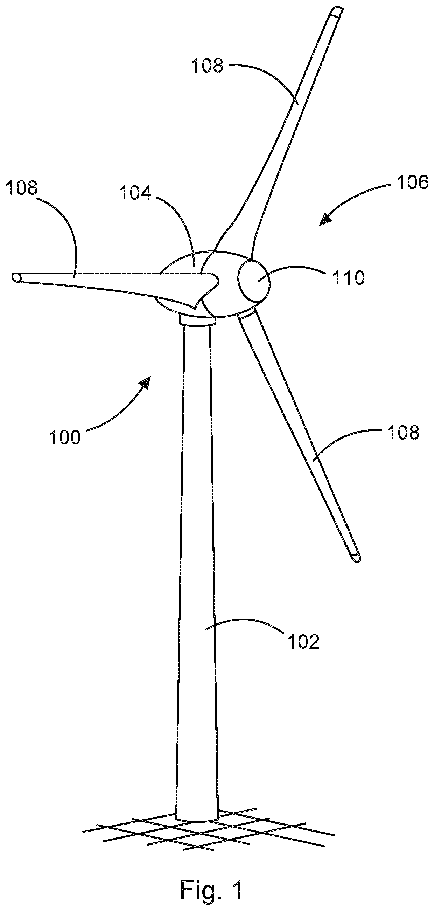

Figur 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

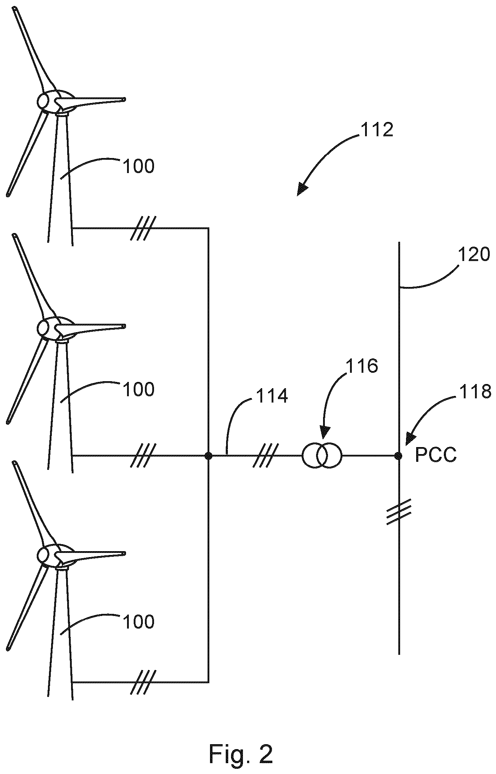

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

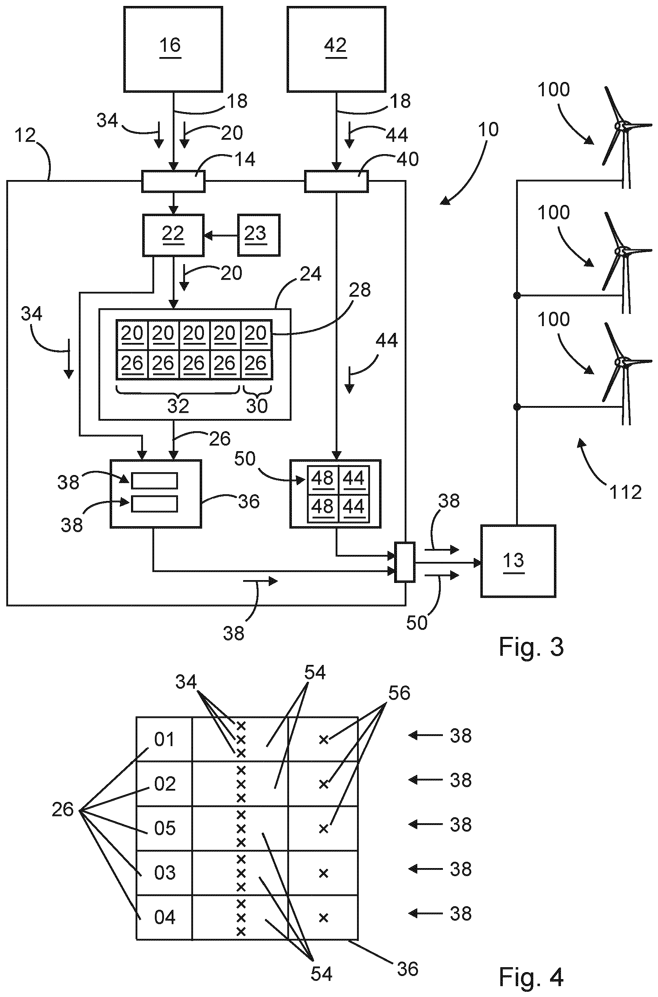

Figur 3 zeigt ein System 10 gemäß einem Ausführungsbeispiel der Erfindung. Das System 10 umfasst einen Windparkserver 12 und einen Windparkregler 13. Der Windparkserver 12 weist eine Eingangsschnittstelle 14 auf, über die ein entfernter Rechner 16 mittels einer Internetverbindung 18 Zugriff auf den Windparkserver 12 erhält. Hierzu wird vom entfernten Rechner 16 ein Zugangsdatensatz 20 an die Eingangsschnittstelle 14 gesendet. Ein Zugangsdatensatz 20 umfasst beispielsweise einen Benutzernamen und ein Kennwort. Der Zugangsdatensatz 20 wird nach dem Empfang über die Eingangsschnittstelle 14 einer Benutzerverifikationseinheit 22 zugeführt. Hier wird der Zugangsdatensatz 20 mit hinterlegten vordefinierten Zugangsdatensätzen 23 verglichen. Bei einer erfolgreichen Authentifizierung eines Benutzers wird der Zugangsdatensatz 20 oder ein Teil des Zugangsdatensatzes 20 an eine Zuordnungseinheit 24 übertragen.

In der Zuordnungseinheit 24 erfolgt eine Zuordnung des Zugangsdatensatzes 20 oder eines Teils des Zugangsdatensatzes 20 zu einem Benutzeridentifikator 26. Dies erfolgt beispielsweise anhand einer Tabelle 28. Das heißt, wenn ein Zugangsdatensatz 20 zu einer erfolgreichen Authentifizierung führt, wird in Abhängigkeit von diesem Zugangsdatensatz 20 ein Benutzeridentifikator 26 in der Zuordnungseinheit 24 ermittelt. Hierbei sind die Zugangsdatensätze 20, mit denen ein Benutzer erfolgreich authentifiziert werden kann, jeweils entweder einer ersten Menge 30 oder einer zweiten Menge 32 zugeordnet. Ist ein Zugangsdatensatz 20 der zweiten Menge 32 zugeordnet, so ist in der Zuordnungseinheit 24 genau ein Benutzeridentifikator 26 für jeden der Zugangsdatensätze 20 hinterlegt. Ist ein Zugangsdatensatz 20 der ersten Menge 30 zugeordnet, so teilen sich alle der ersten Menge 30 zugeordneten Zugangsdatensätze 20 denselben Benutzeridentifikator 26.

Nach einer erfolgreichen Authentifizierung an der Eingangsschnittstelle 14 können vom entfernten Rechner 16 zusätzlich Sollwerte 34 für die Steuerung oder Regelung des Windparks 112 oder die Steuerung oder Regelung der Windenergieanlage 100 des Windparks 112 an den Windparkserver 12 gesendet werden. Diese Sollwerte 34 werden nach erfolgreicher Authentifizierung zusammen mit dem Benutzeridentifikator 26 einer Liste 36 zugeführt und in der Liste 36 gespeichert. Einträge 38 der Liste 36 werden dann an den Windparkregler 13 übertragen, um dort eine Regelung in Abhängigkeit von den Einträgen 38 auszuführen. Anhand der Einträge 38 kann der Windparkregler den empfangenen Sollwerten 34 in Abhängigkeit von dem jeweils zugeordneten Benutzeridentifikator 26 eine Priorität für die Steuerung oder Regelung zuordnen.

Ferner umfasst der Windparkserver 12 eine weitere Eingangsschnittstelle 40, mit der ein weiterer entfernter Rechner 42 verbindbar ist. Über den weiteren entfernten Rechner 42 können ebenfalls nach Authentifizierung weitere Sollwerte 44 an die weitere Eingangsschnittstelle 40 übertragen werden. Diese weiteren Sollwerte 44 werden in eine weitere Liste 46 zusammen mit einem Schnittstellenidentifikator 48, z. B. PID, eingetragen. Die weiteren Einträge 50 der weiteren Liste 46 werden ebenfalls an den Windparkregler 13 für eine Steuerung oder Regelung der Windenergieanlagen 100 übertragen.

Figur 4 zeigt die Liste 36 mit ihren Einträgen 38. Demnach ist in jeder Zeile ein Eintrag 38 vorhanden. In der linken Spalte werden die unterschiedlichen Benutzeridentifikatoren 26 im jeweiligen Eintrag 38 der Liste 36 vorgenommen. In der danebenliegenden Spalte werden mit jedem Eintrag 38 einem Benutzeridentifikator 26 mehrere Sollwerte 34 als Sollwertgruppen 54 zugeordnet. Weiter ist in der rechten Spalte in jedem Eintrag 38 eine Kennung 56 vorgesehen, die angibt, ob der jeweilige Eintrag 38 bereits erfolgreich an den Windparkregler 13 übertragen wurde.

Die weitere Liste 46 ist nicht dargestellt, kann aber gemäß einem weiteren Ausführungsbeispiel so aussehen wie ein Eintrag der Liste 36, wobei anstelle der Benutzeridentifikatoren 26 der Schnittstellenidentifikator 48 der weiteren Schnittstelle 40 angegeben ist.

## Patentansprüche

1. Verfahren zum Senden von Sollwerten (34) durch einen Windparkserver (12) an einen Windparkregler (13) eines Windparks (112), wobei der Windparkserver (12) eine Eingangsschnittstelle (14) aufweist und mit der Eingangsschnittstelle (14) Sollwerte (34) für den Windparkregler (13) nach einer erfolgreichen Authentifizierung durch einen mit der Eingangsschnittstelle (14) empfangenen Zugangsdatensatz (20) von einer externen Einheit, nämlich einem entfernten Rechner, empfangen werden, wobei
im Windparkserver (12) jedem von mehreren Zugangsdatensätzen (20), die vordefinierten Zugangsdatensätzen (23) entsprechen, eine von mehreren vordefinierten Benutzeridentifikatoren (26) zugeordnet wird,
wobei mit dem Windparkserver einem von der Eingangsschnittstelle (20) empfangenen Sollwert (34) der Benutzeridentifikator (26) zugeordnet wird, der dem Zugangsdatensatz (20) zugeordnet ist, der für die erfolgreiche Authentifizierung vor dem Empfang des Sollwerts (34) verwendet wurde und
empfangene Sollwerte (20) mit dem zugeordneten Benutzeridentifikator (26) an den Windparkregler (13) ausgegeben werden.

2. Verfahren nach Anspruch 1, wobei im Windparkserver (12) jeder der Zugangsdatensätze (20) jeweils einer ersten Menge (30) der Zugangsdatensätze (20) oder einer zweiten Menge (32) der Zugangsdatensätze zugeordnet wird und
jedem der Zugangsdatensätze (20) der ersten Menge (30) derselbe Benutzeridentifikator der mehreren vordefinierten Benutzeridentifikatoren zugeordnet ist und jedem der Zugangsdatensätze (20) der zweiten Menge (32) jeweils ein individueller Benutzeridentifikator (26) der mehreren vordefinierten Benutzeridentifikatoren (26) zugeordnet ist.

3. Verfahren nach Anspruch 1 oder 2, wobei der Windparkserver (12) mindestens eine weitere Eingangsschnittstelle (40) aufweist und mit der weiteren Eingangsschnittstelle (40) weitere Sollwerte (44) für den Windparkregler (13) empfangen und die weiteren Sollwerte (44) an den Windparkregler ausgegeben werden, wobei der Eingangsschnittstelle (14) und der weiteren Eingangsschnittstelle (40) jeweils unterschiedliche Schnittstellenidentifikatoren (48) zugeordnet sind und
empfangene Sollwerte (34) mit dem Schnittstellenidentifikator (48) der Eingangsschnittstelle (14) und/oder dem zugeordneten Benutzeridentifikator (26) und empfangene weitere Sollwerte (44) mit dem Schnittstellenidentifikator (48) der weiteren Eingangsschnittstelle (40) an den Windparkregler (13) ausgegeben werden.

4. Verfahren nach Anspruch 3, wobei die weiteren Sollwerte (44) benutzerkennungslos an den Windparkregler (13) gesendet werden.

5. Verfahren nach einem der vorhergehenden Ansprüche, wobei im Windparkserver (12) eine Liste (36) mit mehreren Einträgen (38) hinterlegt ist, wobei die Anzahl der Einträge (38) vorzugsweise der Anzahl der vordefinierten Benutzeridentifikatoren (26) entspricht und jeder der vordefinierten Benutzeridentifikatoren (26) jeweils mit einem der Einträge (38) genau einer Sollwertgruppe (54) zugeordnet ist, wobei die Sollwertgruppe (54) mehrere Sollwerte (34) umfasst und die Sollwerte (34) einer Sollwertgruppe (54) unterschiedlichen Arten von Sollwerten (34), insbesondere umfassend einen Sollwert für eine Regelung einer Wirkleistung und einen Sollwert für eine Regelung einer Blindleistung, entsprechen, und wobei empfangene Sollwerte (34) in den Sollwertgruppen (54) entsprechend ihrer zugeordneten Benutzeridentifikation (26) und Art eingetragen werden.

6. Verfahren nach Anspruch 5, wobei eine Reihenfolge der Einträge (38) nach dem Empfangen eines neuen Sollwerts (34) aktualisiert wird, so dass der Eintrag (38) mit dem neuen empfangenen Sollwert (34) als letzter Eintrag (38) hinterlegt wird, wodurch die Einträge (38) nach dem Empfangszeitpunkt der Sollwerte (34) sortiert sind, derart, dass vorzugsweise der erste Eintrag (38) den am weitesten in der Vergangenheit empfangenen Sollwert (34) und der letzte Eintrag (38) den jüngsten empfangenen Sollwert (34) umfasst.

7. Verfahren nach Anspruch 6, wobei nach einem Empfangen eines neuen Sollwerts (34) der Eintrag (38) mit dem neuen Sollwert (34) an den Windparkregler (13) übertragen wird.

8. Verfahren nach einem Ansprüche 5 bis 7, wobei nach einem Empfangen einer Anfrage vom Windparkregler (13) alle Einträge (38) an den Windparkregler (13) übertragen werden, wobei vorzugsweise die Einträge (38) in ihrer sortierten Reihenfolge gesendet werden, so dass vorzugsweise ein Eintrag (38), der den am weitesten in der Vergangenheit empfangenen Sollwert (34) umfasst, zuerst und der letzte Eintrag (38), der den jüngsten empfangenen Sollwert (34) umfasst, zuletzt übertragen wird.

9. Verfahren nach einem der Ansprüche 5 bis 7, wobei jeder Eintrag (38) eine Kennung (56) aufweist, die angibt, ob der Eintrag (38) erfolgreich vom Windparkregler (13) empfangen wurde, wobei die Kennung (56) in Abhängigkeit von einer erhaltenen oder ausbleibenden Erfolgsmeldung des Windparkreglers (13) nach dem Senden eines Eintrags (38) aktualisiert wird.

10. Windparkserver (12), der eingerichtet ist, das Verfahren nach einem der Ansprüche 1 bis 9 auszuführen.

11. Windparkserver (12) nach Anspruch 10, wobei die Eingangsschnittstelle (14) eine OPC, Open Platform Communications, Spezifikation erfüllt, insbesondere OPC-XML DA, Open Platform Communications zur XML-basierten Übertragung von Echtzeitwerten, oder die Eingangsschnittstelle eine Schnittstelle ist, die eine IEC 61400-Norm, insbesondere die IEC 61400-1:2019 erfüllt, und vorzugsweise die weitere Eingangsschnittstelle (40) eine Spezifikation erfüllt, die sich von der Spezifikation der Eingangsschnittstelle (14) unterscheidet.

12. System mit einem Windparkserver (12) nach Anspruch 10 oder 11 und einem Windparkregler (13).

13. System nach Anspruch 12, wobei der Windparkregler (13) eingerichtet ist, mindestens eine Windenergieanlage (100) in Abhängigkeit von empfangenen Einträgen (38) zu regeln.

14. System nach Anspruch 12 oder 13, wobei der Windparkregler (13) eingerichtet ist, die Reihenfolge der Empfangszeitpunkte der Einträge (38) durch den Windparkregler (13) bei der Festlegung einer Priorität einer Regelung zu berücksichtigen, derart, dass ein Eintrag, der den am weitesten in der Vergangenheit liegenden Sollwert umfasst, zuerst und der letzte Eintrag, der den jüngsten empfangenen Sollwert umfasst, zuletzt zur Regelung verwendet wird.

15. System nach einem der Ansprüche 12 bis 14, wobei der Regler eingerichtet ist, einem Sollwert (38) oder einer Sollwertgruppe (54) eine Priorität in Abhängigkeit von einem Schnittstellenidentifikator (48) und/oder einem Benutzeridentifikator (26), die dem Sollwert (34) oder der Sollwertgruppe (54) zugeordnet ist, zuzuordnen.

## Claims

1. A method for sending target values (34) to a wind farm regulator (13) of a wind farm (112) via a wind farm server (12), wherein the wind farm server (12) has an input interface (14), and the input interface (14) is used to receive target values (34) for the wind farm regulator (13) after a successful authentication by an access data record (20) received with the input interface (14) from an external unit, namely a remote computer, wherein
one of several predefined user identifiers (26) is allocated in the wind farm server (12) to each of several access data records (20), which correspond to predefined access data records (23),
wherein the wind farm server is used to allocate the user identifier (26) allocated to the access data record (20) used for successful authentication before receiving the target value (34) to a target value (34) received from the input interface (20), and received target values (20) with the allocated user identifier (26) are output to the wind farm regulator (13).

2. The method according to claim 1, wherein each of the access data records (20) is allocated to a respective first set (30) of access data records (20) or a second set (32) of access data records in the wind farm server (12), and the same user identifier of the several predefined user identifiers is allocated to each of the access data records (20) of the first set (30), and
a respective individual user identifier (26) of the several predefined user identifiers (26) is allocated to each of the access data records (20) of the second set (32).

3. The method according to claim 1 or 2, wherein the wind farm server (12) has at least one additional input interface (40), and the additional input interface (40) is sued to receive additional target values (44) for the wind farm regulator (13), and output the additional target values (44) to the wind farm regulator, wherein different respective interface identifiers (48) are allocated to the input interface (14) and the additional input interface (40), and received targe values (34) with the interface identifier (48) of the input interface (14) and/or the allocated user identifier (26) and received additional target values (44) with the interface identifier (48) of the additional input interface (40) are output to the wind farm regulator (13).

4. The method according to claim 3, wherein the additional target values (44) are sent to the wind farm regulator (13) without a user ID.

5. The method according to one of the preceding claims, wherein a list (36) with several entries (38) is saved in the wind farm server (12), wherein the number of entries (38) preferably corresponds to the number of predefined user identifiers (26), and each of the predefined user identifiers (26) with a respective one of the entries (38) is allocated to precisely one target value group (54), wherein the target value group (54) comprises several target values (34), and the target values (34) of one target value group (54) correspond to different types of target values (34), in particular comprising a target value for regulating an active power and a target value for regulating a reactive power, and wherein received target values (34) in the target value groups (54) are entered according to their allocated user identification (26) and type.

6. The method according to claim 5, wherein a sequence of entries (38) is updated after a new target value (34) has been received, so that the entry (38) with the newly received target value (34) is saved as the last entry (38), so that the entries (38) are sorted by the time the target values (34) were received, preferably such that the first entry (38) comprises the target value (34) received furthest in the past, and the last entry (38) comprises the target value (34) received most recently.

7. The method according to claim 6, wherein once a new target value (34) has been received, the entry (38) with the new target value (34) is transmitted to the wind farm regulator (13).

8. The method according to one of claims 5 to 7, wherein all entries (38) are transmitted to the wind farm regulator (13) after a request has been received from the wind farm regulator (13), wherein the entries (38) are preferably sent in their sorted sequence, so that an entry (38) that comprises the target value (34) received furthest in the past is transmitted first, and the last entry (38) that comprises the target value (34) received most recently is transmitted last.

9. The method according to one of claims 5 to 7, wherein each entry (38) has an ID (56) that indicates whether the entry (38) was successfully received from the wind farm regulator (13), wherein the ID (56) is updated as a function of a received or missing success message of the wind farm regulator (13) after an entry (38) has been sent.

10. A wind farm server (12) set up to implement the method according to one of claims 1 to 9.

11. The wind farm server (12) according to claim 10, wherein the input interface (14) satisfies an OPC (open platform communications specification), in particular OPC XML-DA, open platform communications for the XML-based transmission of real-time values, or the input interface is an interface that satisfies an IEC 61400 standard, in particular IEC 61400-1:2019, and the additional input interface (40) preferably satisfies a specification that differs from the specification of the input interface (14).

12. A system with a wind farm server (12) according to claim 10 or 11 and a wind farm regulator (13).

13. The system according to claim 12, wherein the wind farm regulator (13) is set up to regulate at least one wind turbine (100) as a function of received entries (38).

14. The system according to claim 12 or 13, wherein the wind farm regulator (13) is set up to consider the sequence of times at which the entries (38) are received by the wind farm regulator (13) when establishing the priority of a regulation of the wind turbines, such that an entry that comprises the target value lying furthest in the past is used first, and the last entry that comprises the target value received most recently is used last for regulation purposes.

15. The system according to one of claims 12 to 14, wherein the regulator is set up to allocate a priority to a target value (38) or a target value group (54) as a function of an interface identifier (48) and/or a user identifier (26) that is allocated to the target value (34) or the target value group (54).

## Revendications

1. Procédé d'envoi de valeurs de consigne (34) par un serveur de parc éolien (12) à un régulateur de parc éolien (13) d'un parc éolien (112), dans lequel le serveur de parc éolien (12) présente une interface d'entrée (14) et les valeurs de consigne (34) pour le régulateur de parc éolien (13) sont reçues avec l'interface d'entrée (14) après une authentification réussie par un jeu de données d'accès (20) reçu avec l'interface d'entrée (14) d'une unité externe, à savoir un ordinateur distant, dans lequel
dans le serveur de parc éolien (12), l'un de plusieurs identifiants d'utilisateur (26) prédéfinis est attribué à chacun de plusieurs jeux de données d'accès (20), qui correspondent aux jeux de données d'accès (23) prédéfinis,
dans lequel avec le serveur de parc éolien l'identifiant d'utilisateur (26), qui est attribué au jeu de données d'accès (20) qui a été utilisé pour l'authentification réussie avant la réception de la valeur de consigne (34), est attribué à une valeur de consigne (34) reçue par l'interface d'entrée (20) et
les valeurs de consigne (20) reçues avec l'identifiant d'utilisateur (26) attribué sont délivrées au régulateur de parc éolien (13).

2. Procédé selon la revendication 1, dans lequel, dans le serveur de parc éolien (12), chacun des jeux de données d'accès (20) est attribué respectivement à une première quantité (30) des jeux de données d'accès (20) ou à une seconde quantité (32) des jeux de données d'accès et le même identifiant d'utilisateur des plusieurs identifiants d'utilisateur prédéfinis est attribué à chacun des jeux de données d'accès (20) de la première quantité (30) et un identifiant d'utilisateur (26) individuel des plusieurs identifiants d'utilisateur (26) prédéfinis est respectivement attribué à chacun des jeux de données d'accès (20) de la seconde quantité (32).

3. Procédé selon la revendication 1 ou 2, dans lequel le serveur de parc éolien (12) présente au moins une autre interface d'entrée (40) et avec l'autre interface d'entrée (40) d'autres valeurs de consigne (44) pour le régulateur de parc éolien (13) sont reçues et les autres valeurs de consigne (44) sont délivrées au régulateur de parc éolien, dans lequel des identifiants d'interface (48) différents sont respectivement attribués à l'interface d'entrée (14) et à l'autre interface d'entrée (40) et
les valeurs de consigne (34) reçues avec l'identifiant d'interface (48) de l'interface d'entrée (14) et/ou l'identifiant d'utilisateur (26) attribué et d'autres valeurs de consigne (44) reçues avec l'identifiant d'interface (48) de l'autre interface d'entrée (40) sont délivrées au régulateur de parc éolien (13).

4. Procédé selon la revendication 3, dans lequel les autres valeurs de consigne (44) sont envoyées sans code d'identification utilisateur au régulateur de parc éolien (13).

5. Procédé selon l'une quelconque des revendications précédentes, dans lequel une liste (36) avec plusieurs entrées (38) est enregistrée dans le serveur de parc éolien (12), dans lequel le nombre d'entrées (38) correspond de préférence au nombre d'identifiants d'utilisateur (26) prédéfinis et chacun des identifiants d'utilisateur (26) prédéfinis respectivement avec l'une des entrées (38) est attribué à exactement un groupe de valeurs de consigne (54), dans lequel le groupe de valeurs de consigne (54) comprend plusieurs valeurs de consigne (34) et les valeurs de consigne (34) correspondent à un groupe de valeurs de consigne (54) de différents types de valeurs de consigne (34), comprenant en particulier une valeur de consigne pour une régulation d'une puissance active et une valeur de consigne pour une régulation d'une puissance réactive, et dans lequel les valeurs de consigne (34) reçues sont entrées dans les groupes de valeurs de consigne (54) en fonction de leur identification d'utilisateur (26) et de leur type attribués.

6. Procédé selon la revendication 5, dans lequel un ordre des entrées (38) est mis à jour après la réception d'une nouvelle valeur de consigne (34), de sorte que l'entrée (38) avec la nouvelle valeur de consigne (34) reçue est enregistrée comme dernière entrée (38), ce qui a pour effet que les entrées (38) sont triées selon le moment de réception des valeurs de consigne (34), de sorte que de préférence la première entrée (38) comprend la valeur de consigne (34) reçue la plus éloignée dans le passé et la dernière entrée (38) la valeur de consigne (34) reçue la plus récente.

7. Procédé selon la revendication 6, dans lequel, après réception d'une nouvelle valeur de consigne (34), l'entrée (38) est transmise avec la nouvelle valeur de consigne (34) au régulateur de parc éolien (13).

8. Procédé selon les revendications 5 à 7, dans lequel, après une réception d'une requête du régulateur de parc éolien (13), toutes les entrées (38) sont transmises au régulateur de parc éolien (13), dans lequel de préférence les entrées (38) sont envoyées dans leur ordre trié de sorte que, de préférence, une entrée (38), qui comprend la valeur de consigne (34) reçue la plus éloignée dans le passé, est transmise en premier et la dernière entrée (38), qui comprend la valeur de consigne (34) reçue la plus récente, est transmise en dernier.

9. Procédé selon l'une quelconque des revendications 5 à 7, dans lequel chaque entrée (38) présente un code d'identification (56) qui indique si l'entrée (38) a été reçue avec succès par le régulateur de parc éolien (13), dans lequel le code d'identification (56) est mis à jour en fonction d'un message de réussite reçu ou manquant du régulateur de parc éolien (13) après l'envoi d'une entrée (38).

10. Serveur de parc éolien (12), qui est configuré pour mettre en œuvre un procédé selon l'une quelconque des revendications 1 à 9.

11. Serveur de parc éolien (12) selon la revendication 10, dans lequel l'interface d'entrée (14) répond à une spécification OPC, Open Platform Communications, en particulier OPC-XML DA, Open Platform Communications pour la transmission de valeurs en temps réel basée sur XML, ou l'interface d'entrée est une interface qui est conforme à une norme CEI 61400, en particulier la norme CEI 61400-1:2019, et de préférence l'autre interface d'entrée (40) répond à une spécification qui diffère de la spécification de l'interface d'entrée (14).

12. Système avec un serveur de parc éolien (12) selon la revendication 10 ou 11 et un régulateur de parc éolien (13).

13. Système selon la revendication 12, dans lequel le régulateur de parc éolien (13) est configuré pour réguler au moins une éolienne (100) en fonction d'entrées (38) reçues.

14. Système selon la revendication 12 ou 13, dans lequel le régulateur de parc éolien (13) est configuré pour prendre en compte l'ordre des moments de réception des entrées (38) par le régulateur de parc éolien (13) lors de la définition d'une priorité d'une régulation, de sorte qu'une entrée qui comprend la valeur de consigne la plus éloignée dans le passé est utilisée en premier pour la régulation et la dernière entrée, qui comprend la valeur de consigne reçue la plus récente, en dernier.

15. Système selon l'une quelconque des revendications 12 à 14, dans lequel le régulateur est configuré pour associer une priorité à une valeur de consigne (38) ou à un groupe de valeurs de consigne (54) en fonction d'un identifiant d'interface (48) et/ou d'un identifiant d'utilisateur (26) qui est attribué à la valeur de consigne (34) ou au groupe de valeurs de consigne (54).
